(19) Europäisches Patentamt

European Patent Office

Office européen des brevets

(11) **EP 0 844 429 B1**

(12) **FASCICULE DE BREVET EUROPEEN**

(45) Date de publication et mention
de la délivrance du brevet:
**21.04.2004 Bulletin 2004/17**

(51) Int Cl.⁷: **F16L 58/10**, F16L 11/12,
C08K 3/22, C08K 5/17

(21) Numéro de dépôt: **97402750.0**

(22) Date de dépôt: **17.11.1997**

(54) **Gaine à perméabilité limitée et application aux conduites sous pression**

Hülle mit geringer Permeabilität und ihre Verwendung in Hochdruckleitungen

Low-permeability sheath and its use in high pressure conduits

(84) Etats contractants désignés:
**DE DK FR GB IT**

(30) Priorité: **22.11.1996 FR 9614432**

(43) Date de publication de la demande:
**27.05.1998 Bulletin 1998/22**

(73) Titulaire: **Institut Français du Pétrole
92852 Rueil-Malmaison Cedex (FR)**

(72) Inventeurs:
• **Jarrin, Jacques
92000 Nanterre (FR)**
• **Perrin, Louis
91160 Champlan (FR)**

(56) Documents cités:
**EP-A- 0 541 329**      **US-A- 4 402 346**
**US-A- 4 510 974**

• **PATENT ABSTRACTS OF JAPAN vol. 011, no. 290 (C-447), 18 septembre 1987 & JP 62 084153 A (SUMITOMO CHEM CO LTD;OTHERS: 01), 17 avril 1987,**
• **DATABASE WPI Section Ch, Week 8721 Derwent Publications Ltd., London, GB; Class A35, AN 87-146893 XP002034251 & JP 62 084 153 A (SUMITOMO CHEM IND KK) , 17 avril 1987**
• **CHEMICAL ABSTRACTS, vol. 107, no. 12, 21 septembre 1987 Columbus, Ohio, US; abstract no. 100531, MCGLONE, K.: "The use of amines in steam condensate return lines" XP002034250 & ANTI-CORROS. METHODS MATER., vol. 34, no. 4, 1987, pages 6-8,**

## Description

La présente invention concerne une canalisation utilisable notamment pour le transport de fluides et comportant au moins une gaine interne d'étanchéité permettant, au moins, de limiter la perméabilité aux fluides corrosifs, notamment aux gaz acides, par exemple l'$H_2S$ et le $CO_2$.

L'invention s'applique notamment aux hydrocarbures transportés dans des conduites susceptibles d'être sous forte pression et à des températures élevées pendant de longues périodes de temps.

Les conduites peuvent être des tubes métalliques doublés intérieurement d'un tube en thermoplastique à perméabilité limitée, ou des conduites flexibles comportant, par exemple, des éléments suivants:

- une carcasse en feuillard agrafé destinée à éviter l'écrasement de la conduite dû à pression différentielle entre l'extérieur et l'intérieur,
- une gaine interne d'étanchéité en matériau plastique destinée à assurer l'étanchéité interne de la conduite,
- au moins une couche d'armures métalliques pour résister aux efforts de pression et/ou de traction,
- une seconde gaine externe en matériau plastique assurant l'étanchéité externe de la conduite.

Les problèmes inhérents aux transports de fluides à température et pression élevées sont liés à la perméabilité des gaines en matière plastique. On sait que le débit de gaz à travers les thermoplastiques utilisés pour fabriquer les gaines d'étanchéité, augmente avec la température et la pression. Dans le cas de gaz corrosifs, tel l'$H_2S$, les armures ou les tubes métalliques peuvent subir de la corrosion accélérée. En outre, dans le cas d'une conduite flexible, le gaz peut s'accumuler entre les deux gaines, ce qui peut provoquer l'éclatement de la gaine externe lorsque la gaine externe est moins perméable.

On connaît le document EP-0225901 qui décrit une gaine interne à perméabilité diminuée par l'enroulement en spirale d'une fine bande métallique autour d'une gaine plastique. Cependant les zones de superposition des bandes restent des zones très perméables au gaz. Une autre gaine est connue du document US 4 402 346.

Ainsi, la présente invention concerne une gaine en matériau thermoplastique extrudable pour la fabrication d'une barrière d'étanchéité à des gaz acides. La gaine comporte un taux déterminé d'au moins une charge de produit chimiquement actif avec les gaz acides de façon à annihiler irréversiblement les effets corrosifs desdits gaz, le taux de charge étant déterminé en fonction de la perméabilité aux gaz dudit matériau thermoplastique.

La présente invention se fonde principalement sur les réactions chimiques connues et pratiquées dans le domaine des procédés d'épurations des gaz acides, notamment résultant de la présence d'$H_2S$ et de $CO_2$, mais nullement utilisées pour fabriquer des gaines d'étanchéité en polymère thermoplastique extrudable, par exemple des polyoléfines, des polyamides, ou des polymères fluorés, constituant actuellement les gaines industrielles dans le domaine des conduites d'exploitation pétrolière, flexibles ou rigides. On peut citer les réactions irréversibles suivantes:

- Charges comportant des oxydes métalliques:

$$PbO + H_2S \rightarrow PbS + H_2O \tag{1}$$

$$ZnO + H_2S \rightarrow ZnS + H_2O \tag{2}$$

Il en est de même avec le CuO, CdO, NiO, CoO, Sn02 et MoO3.

- Charges comportant des amines, telles les alkanolamines ou les polyethylènes polyamines:

$$2RNH_2 + H_2S \rightarrow (RNH_3)_2S \tag{3}$$

$$(RNH_3)_2S + H_2S \rightarrow 2RNH_3HS \tag{4}$$

$$2RNH_2 + CO_2 + H_2O \rightarrow (RNH_3)_2CO3 \tag{5}$$

$$(RNH_3)CO_3 + CO_2 + H_2O \rightarrow 2RNH_3HCO_3 \tag{6}$$

$$2RNH_2 + CO_2 \rightarrow RNHCOONH_3R \tag{7}$$

D'après les réactions 3 et 4, on voit que l'$H_2S$ réagit directement et rapidement avec la MEA, ou tout autre amine primaire, pour former le sulfure d'amine et l'hydrosulfide. Les mêmes réactions ont lieu entre l'$H_2S$ et les amines secondaires ou tertiaires telles DEA, DIPA et MDEA.

Le dioxyde de carbone réagit selon les équations 5, 6 et 7. La réaction 7, donnant la formation d'un sel d'amine d'un acide carbamique substitué, est directe et rapide mais ne peut avoir lieu qu'entre le $CO_2$ et une amine primaire ou secondaire. Les réactions 5 et 6 sont plus lentes car le $CO_2$ doit réagir avec l'eau pour former l'acide carbonique avant de réagir avec l'amine.

Comme polyéthylène polyamine, on peut utiliser le PEHA ou le HEPA de formule générale $H_2N(C_2H_4NH)nH$ avec n=5 pour le PEHA et n compris entre 5 et 7 pour le HEPA. Bien entendu, ces polyamines sont généralement des mélanges.

- Charges comportant des oxydes d'alcalins ou d'alcalineux-terreux:

$$CaO + H_2S \rightarrow CaS + H_2O$$

$$CaO + CO_2 \rightarrow CaCO_3$$

$$Ca(OH)_2 + CO_2 \rightarrow CaCO_3 + H_2O$$

Les agents sélectionnés interviennent avec l'$H_2S$ ou le $CO_2$ dans des réactions non réversibles en présence d'oxygène, dans les conditions d'utilisation des gaines. Il est en effet souhaitable, qu'une fois le gaz acide absorbé, il n'y ait pas d'autres réactions chimiques qui pourraient conduire à des inconvénients sur la gaine thermoplastique.

L'invention sera mieux comprise à la lecture de l'exemple ci-après, illustrée par les figures annexées suivantes:

- La figure 1 montre une structure de conduite flexible comprenant au moins une gaine selon l'invention.
- La figure 2 montre une canalisation rigide comportant une gaine selon l'invention.

On peut évaluer le volume de gaz acide qui peut pénétrer dans une gaine en thermoplastique de perméabilité $P_e$, par la formule suivante:

$$Q = (P_e*S/e)*p*t$$

où S est la surface en contact avec le gaz, et t l'intervalle de temps d'exposition au gaz, et e l'épaisseur.

D'après les mesures réalisées par la demanderesse, la perméabilité Pe est de l'ordre de $10^{-7}$ cm3/cm.s.bar pour la perméabilité à environ $100°C$ du PVDF ou PA 11 à l'$H_2S$ (PVDF est le polyfluorure de vinylidène et le PA 11 est le polyamide 11).

Pour une gaine de diamètre intérieur 15 cm, la surface par mètre de tube, est donc S=4712 cm2.

En considérant une pression d'$H_2S$ de 3 bar et une épaisseur de gaine de 7 mm, le débit Q quotidien de gaz est de l'ordre de:

$$Q = (10^{-7}*4712)/0,7*3*24*3600 = 174 \text{ cm3/jour}$$

En considérant l'$H_2S$ comme un gaz parfait, une mole d'$H_2S$ correspond à un volume de 22400 cm3, donc il y a 174/22400=0,0078 mole/jour d'$H_2S$ qui pénètre dans une longueur unitaire de la gaine considérée, ce qui donne pour une année: environ 2,85 mole/an.

Ce calcul théorique approximatif ne prend pas en compte l'effet de masquage de la surface de gaine par les armures métalliques qui entourent la gaine. On sait que dans des structures, tels que des flexibles armés, la perméabilité est divisée au moins par un facteur supérieur à 2.

D'autre part, si la gaine n'est pas directement en contact avec l'effluent, la température moyenne peut être sensiblement inférieure à 100°C, ce qui diminue fortement la perméabilité de la gaine thermoplastique.

Il faut noter également que dans ce calcul il a été pris en compte de l'$H_2S$ pur à 3 bar de pression, ce qui correspond environ à 300 bar d'un effluent comprenant 1% d'$H_2S$.

Avec la connaissance du taux de perméabilité d'une gaine en matière plastique, soit par calcul, soit par expérimentation, on détermine la quantité d'agent neutralisant, vis-à-vis des gaz acides contenus dans un effluent, qu'il faut incorporer à la matière thermoplastique extrudable pour se garantir de la perméabilité d'une gaine fabriquée à partir de ladite matière, et ceci en fonction des conditions de fonctionnement données.

Pour une gaine de diamètre intérieur 15 cm et d'épaisseur 0,7 cm, le volume de polymère est environ 3450 cm3. Pour des polymères dont la densité est d'environ 1, un mètre de gaine pèse 3450 g.

Compte tenu des réactions écrites plus haut, pour neutraliser 2,8 mole d'$H_2S$ par an et par mètre de tube, il faut

| | |
|---|---|
| pour le ZnO | 228 g, soit un taux de 6,6% en poids |
| pour le PbO | 624 g, soit un taux de 17,3% en poids |
| pour le HEPA | 285 g, soit un taux de 8,3% en poids |

Il est donc clair que l'on peut réaliser des gaines comportant de tels agents pour une capacité active de plusieurs années.

Dans le cas du $CO_2$, dont la valeur de perméabilité à travers les gaines est de même ordre de grandeur que celle de l'$H_2S$, un calcul similaire peut être fait, ce qui met en évidence que les charges dédiées au traitement du $CO_2$ peuvent être incorporés dans une matière thermoplastique pour fabriquer une gaine selon l'invention.

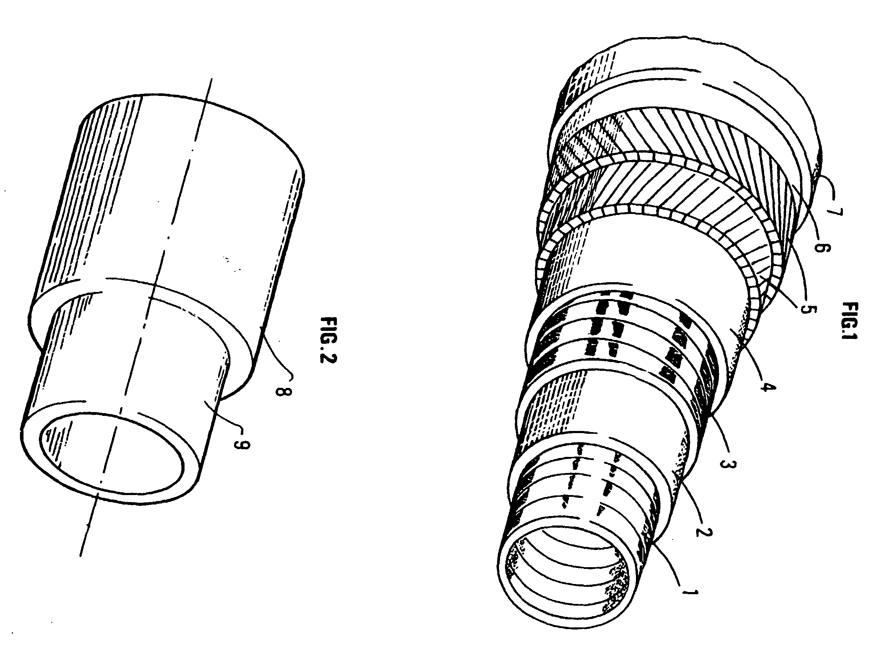

La figure 1 représente une structure de flexible comportant une carcasse interne agrafée en feuillard ou en fil agrafés ou emboîtables 1, une gaine d'étanchéité 2, une couche de fils agrafés ou emboîtables 3, une gaine 4, des armures 5, un ruban 6 et une gaine extérieure 7. L'une au moins des gaines 2 et 4 est réalisée selon la présente invention, et de préférence la gaine interne 2. Il est clair que les gaines peuvent être multicouches et être constituées d'une première couche de thermoplastique sans charge de produit chimiquement actif et d'une deuxième couche selon la gaine de la présente invention. De préférence, la couche selon l'invention est placée à l'extérieur de la première couche, par rapport à l'axe de la conduite. La présente invention concerne également un flexible qui ne comporterait pas de carcasse interne 1. Les gaines sont fabriquées à partir de mélanges préparés à la température de fusion du matériau thermoplastique par ajout des charges d'agents neutralisants, avant extrusion, éventuellement sur un noyau.

La figure 2 représente un tube métallique 8 comportant un chemisage interne comportant au moins une gaine 9 selon la présente invention. La mise en place à l'intérieur du tube 8 se fait selon les techniques connues de chemisage interne.

Essais expérimentaux

Le matériau thermoplastique (PE) utilisé est un copolymère à base d'éthylène et d'oléfines en $C_3$ à $C_8$, commercialisé par FINA sous la référence FINATHENE 3802.

Essais de neutralisation

On fabrique une membrane de diamètre 70 mm et d'épaisseur 2 mm à partir du PE mélangé avec la base. On confine la membrane sous atmosphère de $CO_2$ ou $H_2S$.

La variation de masse de l'échantillon après confinement suivi d'une opération de désorption sous vide à 40° pendant huit heures, donne le rendement.

1) PE chargé en chaux éteinte (Ca(OH)$_2$ :

Mélange de PE et 50% en poids de Ca(OH)$_2$ et 5% d'un produit compatibilisant (par exemple du LOTADER fabriqué par la Société ATOCHEM). Pression de confinement 40b à 80°C pendant sept jours.

| | |
|---|---|
| Poids de départ (g) | 9,8883 |
| Poids final (g) | 11,7103 |
| Poids après désorption (g) | 11,5505 |
| Variation de masse $\Delta m$ | 1,6622 |

(suite)

| Variation de masse théorique | 1,7371 |
|---|---|
| Rendement | 95,1 |

Le rendement est le rapport de $\Delta$m sur la variation de masse théorique calculée à partir de la neutralisation complète.

2) PE chargé en PbO

Pression de confinement 15b d'$H_2S$ à 20°C pendant sept jours.
Echantillon: mélange PE + 20% de PbO.

| Poids de départ (g) | 4,9750 |
|---|---|
| Poids final (g) | 5,1050 |
| Poids après désorption (g) | 5,0015 |
| Variation de masse | 0,0265 |
| Variation de masse théorique | 0,07 |
| Rendement | 35,4 |

Essais de perméabilité

L'essai de perméabilité a été réalisé à 40 bar de $CO_2$ à 80°C.
Dans une cellule, la membrane de thermoplastique PE sépare deux chambres. Une chambre contient le gaz sous pression, l'autre étant à la pression atmosphérique.
On enregistre en fonction du temps le débit de gaz arrivant dans la chambre aval. Le temps retard, qui est le temps à partir duquel la membrane est saturée en gaz, est obtenu par extrapolation à débit nul de la courbe de débit cumulé en fonction du temps.

| Matériaux | Temps retard (h) |
|---|---|
| PE seul | 1,23 |
| PE + 50%Ca(OH)$_2$ | 50 |
| PE + 50%Ca(OH)$_2$ + 5% LOTADER | 50 |
| PE + 35%Ca(OH)$_2$ | 29 |
| PE + 35%Ca(OH)$_2$ + 5% LOTADER | 28 |

**Revendications**

1.   Canalisation pour le transport de fluides contenant au moins un des gaz acides H2S et CO2, la canalisation comprend un élément métallique et, disposée à l'intérieur dudit élément métallique, une gaine annulaire en matériau thermoplastique extrudable, **caractérisée en ce que** ladite gaine comporte une quantité déterminée de produits chimiquement actifs avec lesdits gaz acides de façon à neutraliser irréversiblement les effets corrosifs desdits gaz et éviter les effets corrosifs sur ledit élément métallique.

2.   Canalisation selon la revendication 1, dans laquelle lesdits produits actifs comportent des oxydes métalliques choisis dans le groupe constitué par PbO, ZnO, CuO, CdO, NiO, CoO, SnO2 et MoO3.

3.   Canalisation selon la revendication 1, dans laquelle lesdits produits actifs comportent des amines.

4.   Canalisation selon la revendication 1, dans laquelle lesdits produits actifs comportent des oxydes d'alcalins et d'alcalineux-terreux.

**5.** Canalisation selon la revendication 3, dans laquelle lesdites amines sont des polyéthylènes polyamides.

**6.** Canalisation selon la revendication 4, dans laquelle lesdits oxydes d'alcalins et lesdits alcalineux-terreux sont des CaO.

**7.** Canalisation selon l'une des revendications précédentes, dans laquelle ledit matériau thermoplastique comporte des polyoléfines, des polyamides, ou des polymères fluorés.

**8.** Utilisation de la canalisation selon l'une des revendications 1 à 7, pour la constitution d'une conduite flexible à armatures métalliques pour le transport d'effluents pétroliers comportant de l'$H_2S$ ou du $CO_2$.

**9.** Utilisation de la canalisation selon l'une des revendications 1 à 7, pour la constitution d'une conduite rigide pour le transport d'effluents comportant de l'$H_2S$ ou du $CO_2$.

**10.** Méthode de fabrication d'une canalisation pour le transport de fluides contenant au moins un des gaz acides $H_2S$ et $CO_2$, **caractérisée en ce que** la méthode comporte les étapes :

- on détermine le taux de perméabilité auxdits gaz acides d'une gaine en matériau thermoplastique extrudable ;
- on détermine, en fonction dudit taux de perméabilité et en fonction de conditions de fonctionnement, une quantité de produits chimiquement actifs avec lesdits gaz acides de façon à neutraliser irréversiblement les effets corrosifs desdits gaz et éviter les effets corrosifs sur un élément métallique;
- on fabrique la canalisation en disposant ladite gaine à l'intérieur dudit élément métallique, ladite gaine comportant ladite quantité de produits chimiquement actifs.

**11.** Méthode selon la revendication 10, dans laquelle lesdits produits actifs comportent des oxydes métalliques choisis dans le groupe constitué par PbO, ZnO, CuO, CdO, NiO, CoO, SnO2 et MoO3.

**12.** Méthode selon la revendication 10, dans laquelle lesdits produits actifs comportent des amines.

**13.** Méthode selon la revendication 10, dans laquelle lesdits produits actifs comportent des oxydes d'alcalins et d'alcalineux-terreux.

**14.** Méthode selon la revendication 12, dans laquelle lesdites amines sont des polyéthylènes polyamides.

**15.** Méthode selon la revendication 13, dans laquelle lesdits oxydes d'alcalins et lesdits alcalineux-terreux sont des CaO.

**Patentansprüche**

**1.** Leitung zum Weiterleiten von Flüssigkeiten, die wenigstens eins der Sauergasen $H_2S$ und $CO_2$ enthalten, die Leitung besteht aus einem metallischen Element und, in dem besagten metallischen Element angeordnet, einem ringförmigen Mantel aus einem extrudierbaren thermoplastichen Material, **dadurch gekennzeichnet, daß** der besagte Mantel eine bestimmte Menge von mit den besagten Sauergasen chemisch aktiven Produkte enthält, um die korrosiven Effekte der besagten Gase irreversibel zu neutralisieren und korrosive Effekte auf das metallische Element zu vermeiden.

**2.** Leitung gemäß Anspruch 1, in welcher die besagten aktiven Produkte Metalloxide enthalten, die aus der folgende Gruppe ausgewählt sind : PbO, ZnO, CuO, CdO, NiO, CoO, SnO2 und MoO3.

**3.** Leitung gemäß Anspruch 1, in welcher die besagten aktiven Produkte Amine enthalten.

**4.** Leitung gemäß Anspruch 1, in welcher die besagten aktiven Produkte Alkalioxide und alkalische Erden enthalten.

**5.** Leitung gemäß Anspruch 3, in welcher die besagten Amine Polyethylen-Polyamide sind.

**6.** Leitung gemäß Anspruch 4, in welcher die besagten Alkalioxide und die besagten alkalische Erden CaO sind.

**7.** Leitung gemäß irgendeinem der vorstehenden Ansprüche, in welcher das besagte thermoplastiche Material Polyolefine, Polyamide oder Fluorpolymere enthält.

**8.** Anwendung der Leitung gemäß irgendeinem der Ansprüche 1 bis 7 zur Erzeugung eines flexibeln Rohres mit Metallarmierung zum Weiterleiten von $H_2S$ oder $CO_2$ enthaltenden Erdöleffluenten.

**9.** Anwendung der Leitung gemäß irgendeinem der Ansprüche 1 bis 7 zur Erzeugung eines starren Rohres zum Weiterleiten von $H_2S$ oder $CO_2$ enthaltenden Effluenten.

**10.** Verfahren zur Herstellung einer Leitung zum Weiterleiten von Flüssigkeiten, die wenigstens eins der Sauergasen $H_2S$ und $CO_2$ enthalten, **dadurch gekennzeichnet, daß** das Verfahren die folgenden Stufen enthält :

- die Zahl der Durchlässigkkeit für die besagten Sauergase eines aus einem extrudierbaren thermoplastichen Material bestehenden Mantels wird bestimmt,

- eine Menge von mit den besagten Sauergasen chemisch aktiven Produkte wird in Abhängigkeit von der besagten Durchlässigkeitszahl und in Abhängigkeit von den Betriebsbedingungen bestimmt, um die korrosiven Effekte der besagten Gase irreversibel zu neutralisieren und korrosive Effekte auf ein metallisches Element zu vermeiden,

- die Leitung wird erzeugt indem der besagte Mantel in das besagte metallische Element eingefügt wird, wobei der besagte Mantel die besagte Menge von chemisch aktiven Produkte enthält.

**11.** Verfahren gemäß Anspruch 10, in welchem die besagten aktiven Produkte Metalloxide enthalten, die aus der folgende Gruppe ausgewählt sind : PbO, ZnO, CuO, CdO, NiO, CoO, SnO2 und MoO3.

**12.** Verfahren gemäß Anspruch 10, in welchem die besagten aktiven Produkte Amine enthalten.

**13.** Verfahren gemäß Anspruch 10, in welchem die besagten aktiven Produkte Alkalioxide und alkalische Erden enthalten.

**14.** Verfahren gemäß Anspruch 12, in welchem die besagten Amine Polyethylen-Polyamide sind.

**15.** Verfahren gemäß Anspruch 13, in welchem die besagten Alkalioxide und die besagten alkalische Erden CaO sind.

**Claims**

**1.** A duct for transportation of fluids containing at least one of the acid gases $H_2S$ and $CO_2$, the duct comprises a metallic element and, arranged inside said metallic element, an annular sheath made of an extrudable thermoplastic material, **characterized in that** said sheath comprises a determined quantity of products chemically active with said acid gases so as to irreversibly neutralize the corrosive effects of said gases and to prevent corrosive effects on said metallic element.

**2.** A duct as claimed in claim 1, wherein said active products comprise metal oxides selected from the group made up of PbO, ZnO, CuO, CdO, NiO, CoO, $SnO_2$ and $MoO_3$.

**3.** A duct as claimed in claim 1, wherein said active products comprise amines.

**4.** A duct as claimed in claim 1, wherein said active products comprise alkaline and alkaline-earth oxides.

**5.** A duct as claimed in claim 3, wherein said amines are polyethylene polyamides.

**6.** A duct as claimed in claim 4, wherein said alkaline and alkaline-earth oxides are CaO.

**7.** A duct as claimed in any one of the previous claims, wherein said thermoplastic material comprises polyolefins, polyamides or fluoropolymers.

8. Use of the duct as claimed in any one of claims 1 to 7 for forming a flexible pipe with metal armours for transportation of petroleum effluents comprising $H_2S$ or $CO_2$.

9. Use of the duct as claimed in any one of claims 1 to 7 for forming a rigid pipe for transportation of effluents comprising $H_2S$ or $CO_2$.

10. A method of manufacturing a duct for transportation of fluids containing at least one of the acid gases $H_2S$ and $CO_2$, **characterized in that** the method comprises the following stages :

   - determining the rate of permeability to said acid gases of a sheath made of an extrudable thermoplastic material,

   - determining, as a function of said permeability rate and as a function of the working conditions, a quantity of products chemically active with said acid gases so as to irreversibly neutralize the corrosive effects of said gases and to prevent corrosive effects on a metallic element,

   - manufacturing the duct by arranging said sheath inside said metallic element, said sheath comprising said quantity of chemically active products.

11. A method as claimed in claim 10, wherein said active products comprise metal oxides selected from the group made up of PbO, ZnO, CuO, CdO, NiO, CoO, $SnO_2$ and $MoO_3$.

12. A method as claimed in claim 10, wherein said active products comprise amines.

13. A method as claimed in claim 10, wherein said active products comprise alkaline and alkaline-earth oxides.

14. A method as claimed in claim 12, wherein said amines are polyethylene polyamides.

15. A method as claimed in claim 13, wherein said alkaline and alkaline-earth oxides are CaO.

**FIG.1**

**FIG.2**